Europäisches Patentamt

European Patent Office

Office européen des brevets

(11) Veröffentlichungsnummer : **0 388 583 B1**

(12) # EUROPÄISCHE PATENTSCHRIFT

(45) Veröffentlichungstag der Patentschrift :
23.12.92 Patentblatt 92/52

(21) Anmeldenummer : 90100692.4

(22) Anmeldetag : 13.01.90

(51) Int. Cl.⁵ : **C08L 77/06**, // (C08L77/06, 77:06), C08K5:00, C08K5:43, C08L77:00

(54) In der Kälte schlagzähe thermoplastische Formmassen.

(30) Priorität : **18.03.89 DE 3908931**

(43) Veröffentlichungstag der Anmeldung :
**26.09.90 Patentblatt 90/39**

(45) Bekanntmachung des Hinweises auf die Patenterteilung :
**23.12.92 Patentblatt 92/52**

(84) Benannte Vertragsstaaten :
**AT BE CH DE DK ES FR GB IT LI NL SE**

(56) Entgegenhaltungen :
**EP-A- 0 297 245**
**EP-A- 0 325 740**

(56) Entgegenhaltungen :
**CHEMICAL ABSTRACTS, Band 84, Nr. 12, 22. März 1976, Seite 22, Zusammenfassung Nr. 74891x, Columbus, Ohio, US; & JP-A-75128 794 (TEIKOKU CHEMICAL INDUSTRY CO., LTD) 11-10-1975**
**CHEMICAL ABSTRACTS, Band 100, Nr. 22, 28. Mai 1984, Seite 36, Zusammenfassung Nr. 175830f, Columbus, Ohio, US; I.V. IVANKINAet al.: "Generalized expression relating stress and strain in a wide temperature range for crystalline polymers with differentglass transition temperatures", & MEKH. KOMPOZ. MATER. (ZINATNE) 1984, (1), 142-5**

(73) Patentinhaber : **HÜLS AKTIENGESELLSCHAFT**
**Patentabteilung / PB 15 - Postfach 13 20**
**W-4370 Marl 1 (DE)**

(72) Erfinder : **Schlobohm, Michael, Dr.**
**Lipper Weg 195**
**W-4370 Marl (DE)**
Erfinder : **Schlautmann, Franz-Josef**
**Dorstener Strasse 668**
**W-4358 Haltern 6 (DE)**

**Beschreibung**

Gegenstand der Erfindung sind in der Kälte schlagzähe thermoplastische Formmassen.

An die Stoffeigenschaften von thermoplastischen Formmassen, z. B. für Förderleitungen, werden seitens der Praxis hohe Anforderungen gestellt. Gegenüber dem geförderten Gut müssen sie sich inert verhalten und müssen auch für den Fall einer thermischen Belastung formbeständig bleiben. Für Leitungen, die im Freien verwendet werden, besteht die Notwendigkeit, daß sie den Witterungseinflüssen standhalten. Dies bedeutet, daß sie unter der Einwirkung von Sonneneinstrahlung, Luftfeuchtigkeit, Kälte usw. ihre Gebrauchseigenschaften im wesentlichen nicht verlieren dürfen.

Generell geeignet für Formteile sind alle üblichen Polyamide (PA). Dennoch bestehen - insbesondere für den Einsatz im Freien - Einschränkungen. So sind von den technisch eingesetzten Polyamiden, welche zumindest ein Monomeres mit $\leqq$ 10 C-Atomen in der Kohlenstoffkette besitzen, keine bekannt, die nicht stark gegen Wasser bzw. Luftfeuchtigkeit empfindlich sind. Dadurch fällt die Kälteschlagzähigkeit stark ab.

Besser geeignet sind Polyamide mit höherer C-Atomzahl in der Kohlenstoffkette wie z. B. PA 11 bzw. PA 12, da sie eine erhöhte Witterungsstabilität und damit auch eine verbesserte Kälteschlagzähigkeit aufweisen. Bei diesen technisch gut zugänglichen höheren Polyamiden besteht jedoch der Nachteil, daß im Falle der Mitverwendung von Weichmachern auch wiederum die Kälteschlagzähigkeit abfällt. Dieses Problem muß durch den Zusatz eines Schlagzähmodifiers ausgeräumt werden (DE-AS 27 16 004). Darunter leiden jedoch die Steifigkeit und die Lösemittelbeständigkeit.

PA 11 und PA 12 finden in weichgemachter Form im Kfz-Bereich Anwendung als Kraftstoff- und als Druckluftbremsleitungen. Eine wichtige Voraussetzung für derartige Leitungen ist, daß die Rohrschlagprüfung nach der amerikanischen Norm SAE J 844 d bei -40 °C bestanden wird, wobei Rohre der Abmessung 6,35 x 1 mm als besonders kritisch gelten.

Bei diesem Test können derartige Rohre aus weichgemachten Polyamiden brechen. Die Empfindlichkeit kritischer Rohrmaße gegenüber mechanischer Belastung steigt erfahrungsgemäß mit höherer Extrusionsgeschwindigkeit, d.h. sie ist z. B. ab 40 m/min ausgeprägt.

Aufgabe der Erfindung war es, Formmassen auf Basis von Polyamiden zur Verfügung zu stellen, die auch bei Verwendung von Weichmachern sowie unter Einfluß der Witterung (z. B. Feuchtigkeit) nicht ihre kälteschlagzähen Eigenschaften verlieren.

Die Aufgabe wurde überraschend gelöst durch Formmassen, enthaltend

I. 10 - 90 Teile Polyamid 12 und
90 - 10 Teile Polyamid 1012 und/oder Polyamid 1212
mit einer relativen Lösungsviskosität ($\text{eta}_{rel.}$) der Polyamide im Bereich von 1,5 bis 3,0, wobei die Summe der Teile 100 ergibt,
sowie

II. 0 bis 25 Gew.-%, bezogen auf I., eines Weichmachers.

Bevorzugte Polyamide sind solche mit einer relativen Lösungsviskosität von 1,8 bis 2,5.

Bevorzugte Mischungsverhältnisse sind solche von 30 bis 70 Teilen Polyamid 12 und 70 bis 30 Teilen Polyamid 1012 und/oder Polyamid 1212.

Die Kennzeichnung der Polyamide als Polyamid 1012, Polyamid 1212 oder Polyamid 12 entspricht internationaler Norm, wobei die erste(n) Ziffer(n) die C-Atomzahl des Ausgangsamins und die letzte(n) Ziffer(n) die C-Atomzahl der Dicarbonsäure angeben. Wird nur eine Zahl angegeben, so bedeutet dies, daß von einer Aminocarbonsäure bzw. deren Lactam ausgegangen worden ist (H. Domininghaus "Die Kunststoffe und ihre Eigenschaften", VDI-Verlag 1976, S. 272).

Weichmacher und ihr Einsatz bei Polyamiden sind gleichfalls bekannt.

Eine allgemeine Übersicht über Weichmacher, die für PA geeignet sind, können Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 12 C-Atomen in der Alkoholkomponente, Amide von Arylsulfonsäuren mit 2 bis 12 C-Atomen in der Aminkomponente, bevorzugt Amide der Benzolsulfonsäure.

Als Weichmacher kommen u. a. p-Hydroxybenzoesäureethylester, p-Hydroxybenzoesäureoctylester, Toluolsulfonsäure-n-butylamid, Toluolsulfonsäure-n-octylamid, Benzolsufonsäure-n-butylamid, Benzolsufonsäure-2-ethylhexylamid infrage. Bevorzugter Weichmacher ist Benzolsulfonsäure-n-butylamid.

Im Vorzugsbereich enthält die erfindungsgemäße Formmasse 0 bis 15 Gew.-% Weichmacher - jeweils bezogen auf die Polyamide.

Die Herstellung von PA, wie PA 1212 und PA 1012, ist bekannt (R. Vieweg/A. Müller, Kunststoffhandbuch, Bd. 6 - Polyamid, C. Hanser Verlag, München, 1966, S. 187; Don. E. Floyd, Polyamide Resins, 2. Aufl., Chapman Hall Verlag, New York/London, 1966, S. 55 ff.).

2

Neben den Weichmachern können die erfindungsgemäßen Formmassen noch übliche Hilfs- und Zusatzstoffe wie Stabilisatoren, Pigmente, Füllstoffe, Verstärkungsmittel oder Elastifizierungsmittel enthalten.

Die erfindungsgemäßen Formmassen können noch mit anderen Polyamiden oder hierfür bekannten Polymeren abgemischt werden - vorausgesetzt, die gewünschten erfindungsgemäßen Eigenschaften werden nicht verschlechtert.

Die Herstellung der erfindungsgemäßen Formmassen erfolgt nach den üblichen aus dem Stand der Technik bekannten Methoden, wie z. B. Homogenisieren der Basispolyamide, Weichmacher und gegebenenfalls Hilfs- und Zusatzstoffe auf einem Zweiwellenkneter oder Eindiffundieren des Weichmachers, gegebenenfalls zusammen mit im Weichmacher löslichen Hilfs- und Zusatzstoffen, in die Feststoffmischungen der Basispolyamide, oder Mischen der weichgemachten Basispolymeren als Feststoffe.

Die erfindungsgemäßen Formmassen zeigen gegenüber anderen aus der Technik bekannten Formmassen auf Basis von PA eine Reihe von unerwarteten guten Eigenschaften. Im Vergleich zu PA mit niederer C-Atomzahl ($\leqq$ 10) in den Ausgangsmonomeren werden erfindungsgemäß Formteile erhalten, die auch unter dem Einfluß von Witterung - insbesondere in der Kälte - ihre guten Eigenschaften beibehalten; dies gilt auch im Vergleich zu weichgemachtem PA mit hoher C-Atomzahl oder entsprechenden Mischungen aus PA 12 und PA 11. Die Formmassen weisen auch noch bei Temperaturen um -60 °C eine hervorragende Schlagzähigkeit auf.

Die Formmassen können nach den üblichen Verfahren wie Spritzguß, Extrusion o. ä. zu Formkörpern verarbeitet werden. Darunter sollen sämtliche geformten Gegenstände wie z. B. Fasern, Folien, Formteile, Hohlkörper, Profile und insbesondere Rohre verstanden werden.

Die in der Beschreibung und in den Beispielen genannten Parameter wurden mit Hilfe nachstehender Verfahren bestimmt.

Die relative Viskosität ($eta_{rel.}$) der PA wird in m-Kresol (0,5 g PA in 100 cm³ m-Kresol) bei 25 °C bestimmt (DIN 53 727).

Die Kälteschlagzähigkeit der in den Beispielen eingesetzten Formmassen wurde an Rohren mit einem Außendurchmesser von 6,35 mm und einer Wandstärke von 1 mm gemessen. Die Rohre wurden auf einem 24-D-Einschneckenextruder mit BM-Schnecke (Fa. Maillefer) bei einer Massetemperatur von 230 °C und einer Abzugsgeschwindigkeit von 40 m/min hergestellt.

Einen Teil der Rohre läßt man unbehandelt, ein zweiter Teil wird zwei Stunden in Wasser gekocht und ein dritter Teil 24 Stunden bei 110 °C an Luft im Wärmeofen getempert. Je 10 der getemperten, gekochten bzw. unbehandelten Rohre werden bei -40 °C einer Kälteschlagzähigkeitsprüfung nach SAE J 844 unterworfen. Die Zahl der gebrochenen Rohre ist in der untenstehenden Tabelle 1 aufgeführt.

Darüber hinaus wurde die Schlagzähigkeit an Normkleinstäben nach DIN 53 453, die Kerbschlagzähigkeit ebenfalls an Normkleinstäben nach DIN 53 453 sowie an Normkörpern mit Doppel-V-(DV)-Kerbe nach DIN 53 753 als auch nach ASTM D 256 (Methode A und B) bestimmt.

Die mit Buchstaben gekennzeichneten Beispiele sind nicht erfindungsgemäß.

Unter "Teilen" werden hier grundsätzlich "Gewichtsteile" verstanden.

Beispiele

Herstellung von PA 1012 und PA 1212

In einem druckfesten Polykondensationskessel werden bei einer Innentemperatur von 160 °C 40,3 Teile 1,10-Decandiamin (DA-10)/Dodecandisäure (DDS)-Salz bzw. 42,8 Teile 1,12-Dodecandiamin (DA-12)/DDS-Salz (hergestellt aus 17,23 Teilen DA-10 bzw. 20,03 Teilen DA-12 und 23,03 Teilen DDS) und 0,05 Teilen DDS vorgelegt. Anschließend wird der Kessel durch fünfmaliges Anlegen von Vakuum und anschließendes Befüllen mit Stickstoff inertisiert. Hierzu gibt man über eine Schleuse eine Mischung aus 4 Teilen Wasser und 0,01 Teil $H_3PO_4$ zu und heizt dann innerhalb von 120 Minuten unter Rühren auf eine Innentemperatur von 220 °C auf, wobei sich ein Druck von 19 bar einstellt. Anschließend wird über einen Zeitraum von 90 Minuten der Druck kontinuierlich entspannt und der Kesselinhalt auf eine Innentemperatur von 260 °C aufgeheizt. Nach Erreichen der gewünschten Schmelzeviskosität wird der Rührer abgestellt, ein Stickstoffüberdruck von 20 bar ein gestellt, und nach 30 Minuten Absitzzeit wird das PA 1012 ($eta_{rel.}$ = 1,85) bzw. PA 1212 ($eta_{rel.}$ = 1,89) mit Hilfe einer Spinnpumpe ausgefahren und nach Abkühlen in einem Wasserbad granuliert.

Zur Einstellung des $eta_{rel.}$-Wertes auf 2,15 werden die Polyamide bei 170 °C in fester Phase nachkondensiert.

## Herstellung von PA 12

Die Herstellung erfolgt gemäß Beispiel 5 der DE-OS 21 52 194. Um die endgültige Höhe des $eta_{rel.}$-Wertes von 2,15 zu erreichen, wird das PA 12 nachkondensiert.

Als PA 11 wurde für Vergleichsversuche ein handelsüblicher Typ mit einem $eta_{rel.}$-Wert von 2,18 eingesetzt.

## Herstellung der Formmassen

100 Teile PA, 1 Teil N,N'-Hexamethylen-bis-(3,5-di-tert.-butyl-4-hydroxy)dihydrozimtsäureamid als Stabilisator sowie die in den Tabellen angeführte Menge Weichmacher oder Verstärkungsmittel werden in einem Doppelschneckenextruder homogenisiert, granuliert und auf eine Restfeuchte von < 0,05 Gew.-% getrocknet. Als Weichmacher wird Benzolsulfonsäure-n-butylamid (BBSA) verwendet.

## Biespiele A -D sowie 1 - 6:

Die Beispiele zeigen, daß die erfindungsgemäßen Formmassen gegenüber den aus dem Stand der Technik bekannten die Rohrschlagprüfung nach SAE J 844 d sogar bei -60 °C bestehen; siehe Tabelle 1.

## Beispiele E - F sowie 7 und 8:

Hier wird gezeigt, daß die erfindungsgemäßen Formmassen auch in Abwesenheit von Weichmachern eine verbesserte Kälteschlagzähigkeit besitzen; siehe Tabelle 2.

## Beispiele G und H sowie 9 - 11:

Aus der Tabelle 3 folgt, daß auch die erfindungsgemäßen verstärkten Formmassen eine gegenüber PA 12 verbesserte Kerbschlagzähigkeit besitzen.

Tabelle 1: Rohrschlagprüfungen nach SAE J 844 d. Angegeben wird die Anzahl der gebrochenen Rohre.

| Beispiel | A | B | C | D |
|---|---|---|---|---|
| Zusammen-<br>setzung<br>[Tle.] | 100 PA 11<br><br>14 BBSA<br>1 Stabil. | 100 PA 12<br><br>14 BBSA<br>1 Stabil. | 70 PA 12<br>30 PA 11<br>14 BBSA<br>1 Stabil. | 100 PA 1012<br><br>14 BBSA<br>1 Stabil. |
| geprüft bei -40 °C:<br>1) extrusionsfrisch<br>2) nach Temperung<br>3) nach Kochen | 0<br>2<br>0 | 8<br>9<br>7 | 10<br>10<br>6 | 0<br>0<br>0 |
| geprüft bei -60 °C:<br>nach 1)<br>nach 2)<br>nach 3) | 10<br>8<br>5 | 10<br>10<br>10 | 10<br>10<br>10 | 5<br>3<br>0 |

EP 0 388 583 B1

Tabelle 1: Rohrschlagprüfungen nach SAE J 844 d. Angegeben wird die Anzahl der gebrochenen Rohre.
(Fortsetzung)

| Beispiel | 1 | 2 | 3 | 4 | 5 | 6 |
|---|---|---|---|---|---|---|
| Zusammen-<br>setzung<br>[Tle.] | 70 PA 12<br>30 PA 1012<br>14 BBSA<br>1 Stabil. | 50 PA 12<br>50 PA 1012<br>14 BBSA<br>1 Stabil. | 30 PA 12<br>70 PA 1012<br>14 BBSA<br>1 Stabil. | 70 PA 12<br>30 PA 1212<br>14 BBSA<br>1 Stabil. | 50 PA 12<br>50 PA 1212<br>14 BBSA<br>1 Stabil. | 55 PA 12<br>45 PA 1012<br>7,5 BBSA<br>1 Stabil. |
| geprüft bei -40 °C:<br>1) extrusionsfrisch<br>2) nach Temperung<br>3) nach Kochen | 0<br>0<br>0 | 0<br>0<br>0 | 0<br>0<br>0 | 0<br>0<br>0 | 0<br>0<br>0 | 0<br>0<br>0 |
| geprüft bei -60 °C<br>nach 1)<br>nach 2)<br>nach 3) | 6<br>0<br>0 | 1<br>0<br>0 | 4<br>1<br>0 | 5<br>0<br>0 | 0<br>0<br>0 | 0<br>0<br>0 |

EP 0 388 583 B1

Tabelle 2: Kerbschlagzähigkeit der weichmacherfreien Formmassen

| Beispiel | E | F | G | 7 | 8 |
|---|---|---|---|---|---|
| Zusammen-<br>setzung<br><br>[Tle.] | 100 PA 12<br><br><br>1 Stabil. | 100 PA 11<br><br><br>1 Stabil. | 100 PA 1012<br><br><br>1 Stabil. | 55 PA 12<br>45 PA 1012<br>1 Stabil. | 55 PA 12<br>45 PA 1212<br>1 Stabil. |
| Kerbschlagzähigkeit<br>[kJ/m²]<br>DIN 53 453; bei 23 °C<br>bei 0 °C<br>bei -20 °C<br>bei -40 °C | 29.6\|7/11 k. B.[a]<br>8.7<br>7.7<br>8.3 | k. B.<br>56,1\|6/10 k. B.<br>17.1<br>13.1 | k. B.<br>29.0\|4/11 k. B.<br>14.5<br>11.5 | k. B.<br>k. B.<br>25\|10/11 k. B.<br>18\|7/11 k. B. | k. B.<br>k. B.<br>k. B.<br>21\|8/11 k. B. |
| DV-Kerbschlagzähigkeit<br>[kJ/m²]<br>DIN 53 753; bei 23 °C<br>bei 0 °C<br>bei -20 °C<br>bei -40 °C | k. B.<br>21.8<br>21.4<br>24 | k. B.<br>118\|5/10 k. B.<br>79.5<br>55.8 | k. B.<br>98.9\|9/11 k. B.<br>65.1<br>57.5 | k. B.<br>k. B.<br>k. B.<br>k. B. | k. B.<br>k. B.<br>k. B.<br>k. B. |

[a] k. B. = kein Bruch

EP 0 388 583 B1

Tabelle 3: Verstärkte Formmassen

| Beispiel | H | 9 | I | 10 |
|---|---|---|---|---|
| Zusammensetzung [Tle.] | 100 PA 12 | 55 PA 12<br>45 PA 1012 | 100 PA 12 | 55 PA 12<br>45 PA 1012 |
| | 20 Glasfaser | 20 Glasfaser | 32 Glasfaser | 32 Glasfaser |
| | 1 Stabil. | 1 Stabil. | 0,5 Stabil. | 0,5 Stabil. |
| | | | 0,1 Nigrosin | 0,1 Nigrosin |
| Schlagzähigkeit [kJ/m²] | | | | |
| DIN 53 453; bei 23 °C | 63 | 66 | 59 | 66 |
| 0 °C | 54 | 55 | 55 | 65 |
| -20 °C | 56 | 58 | 58 | 67 |
| -40 °C | 56 | 59 | 59 | 66 |
| Kerbschlagzähigkeit [kJ/m²] | | | | |
| DIN 53 453; bei 23 °C | 20 | 22 | 24 | 31 |
| 0 °C | 16 | 18 | 21 | 26 |
| -20 °C | 14 | 17 | 19 | 24 |
| -40 °C | 13 | 16 | 19 | 21 |

EP 0 388 583 B1

Tabelle 3: Verstärkte Formmassen (Fortsetzung)

| Beispiel | H | 9 | I | 10 |
|---|---|---|---|---|
| DV-Kerbschlagzähigkeit [kJ/m²] | | | | |
| DIN 53 753; bei 23 °C | 26 | 31 | 30 | 37 |
| 0 °C | 21 | 27 | 24 | 34 |
| -20 °C | 22 | 27 | 25 | 33 |
| -40 °C | 22 | 28 | 26 | 33 |
| Kerbschlagzähigkeit | | | | |
| ASTM D 256 [J/m] | | | | |
| Methode A bei 23 °C | 200 | 206 | 220 | 290 |
| bei 0 °C | 127 | 136 | 161 | 212 |
| Methode B bei 23 °C | 220 | 246 | 273 | 330 |
| bei 0 °C | 152 | 166 | 218 | 251 |

**Patentansprüche**

1.  In der Kälte schlagzähe thermoplastische Formmasse, welche enthält:
    I. 10 - 90 Teile Polyamid 12 und
    90 - 10 Teile Polyamid 1012 und/oder Polyamid 1212,
    mit einer relativen Lösungsviskosität (eta$_{rel.}$) der Polyamide im Bereich von 1,5 bis 3,0 (bestimmt nach DIN 53 727 an 0.5 g Polyamid in 100cm³ m-Kresol bei 25°C), wobei die Summe der Teile 100 gibt, sowie

II. 0 bis 25 Gew.-%, bezogen auf I., eines Weichmachers.

2. Formmasse gemäß Anspruch 1,
dadurch gekennzeichnet,
daß der Weichmachergehalt 0 bis 15 Gew.-% beträgt.

3. Formmasse gemäß den Ansprüchen 1 oder 2,
dadurch gekennzeichnet,
daß als Weichmacher Benzolsulfonsäure-n-butylamid verwendet wird.

4. Formmasse gemäß den Ansprüchen 1 bis 3,
dadurch gekennzeichnet,
daß die Polyamide eine relative Lösungsviskosität (eta$_{rel.}$) im Bereich von 1,8 bis 2,5 besitzen.

5. Verwendung der Formmassen gemäß den Ansprüchen 1 bis 4 zur Herstellung von Formkörpern.

6. Verwendung der Formmassen gemäß den Ansprüchen 1 bis 4 zur Herstellung von Rohren.

7. Gemäß den Ansprüchen 5 und 6 hergestellte Formkörper.


## Claims

1. A thermoplastic moulding composition which has a high impact strength at low temperatures and comprises:
   I. 10 - 90 parts of polyamide 12 and
   90 - 10 parts of polyamide 1012 and/or polyamide 1212,
   with a relative solution viscosity (eta$_{rel.}$) of the polyamides in the range from 1.5 to 3.0 (determined in accordance with DIN 53 727 on 0.5 g of polyamide in 100 cm³ of m-cresol at 25°C), the sum of the parts being 100, and
   II. 0 to 25 % by weight, based on I., of a plasticiser.

2. A moulding composition according to claim 1, characterised in that the plasticiser content is 0 to 15 % by weight.

3. A moulding composition according to either of claims 1 and 2, characterised in that benzenesulphonic acid n-butylamide is used as the plasticiser.

4. A moulding composition according to any of claims 1 to 3, characterised in that the polyamides have a relative solution viscosity (eta$_{rel.}$) in the range from 1.8 to 2.5.

5. Use of a moulding composition according to any of claims 1 to 4 for the production of shaped articles.

6. Use of a moulding composition according to any of claims 1 to 4 for the production of pipes.

7. A shaped article produced according to either of claims 5 and 6.


## Revendications

1. Masse à mouler thermoplastique résistant au choc à froid, qui renferme :
   I. de 10 à 50 parties de polyamide "12" et
   de 90 à 10 parties de polyamide "1012" et/ou de polyamide "1212", d'une viscosité relative en solution (êta$_{rel.}$) des polyamides comprise dans un domaine de 1,5 à 3,0 (déterminée selon DIN 53 727 sur 0,5 g de polyamide dans 100 cm³ de méta-crésol à 25°C), la somme des parties étant égale à 100, ainsi que
   II. de zéro à 25 % en poids, relativement à I., d'un plastifiant.

2. Masse à mouler selon la revendication 1, caractérisée par le fait que la teneur en plastifiant est de zéro à 15 % en poids.

3. Masse à mouler selon la revendication 1 ou 2, caractérisée par le fait que l'on utilise, en tant que plastifiant, la n-butylamide de l'acide benzène-sulfonique.

4. Masse à mouler selon les revendications 1 à 3, caractérisée par le fait que les polyamides possèdent en solution une viscosité relative ($\hat{e}ta_{rel.}$) comprise dans un domaine de 1,8 à 2,5.

5. L'utilisation des masses à mouler selon les revendications 1 à 4 pour la fabrication de corps moulés.

6. L'utilisation des masses à mouler selon les revendications 1 à 4 pour la fabrication de tuyaux.

7. Des corps moulés fabriqués selon les revendications 5 et 6.